# EUROPÄISCHE PATENTANMELDUNG

(11) **EP 2 124 318 A1**
(43) Veröffentlichungstag der Anmeldung: **25.11.2009**
(21) Anmeldenummer: 08156627.5
(22) Anmeldetag: 21.05.2008
(51) Int. Cl.: H02K 3/30, H02K 15/12, H02K 15/06

(54) **Verfahren zur Imprägnierung einer Wicklung einer elektrischen Maschine**

(71) Anmelder: ZF Friedrichshafen AG, 88038 Friedrichshafen (DE)
(72) Erfinder: Geiling, Martin, 97456 Dittelbrunn-Hambach (DE); Kewes, Frank, 97421 Schweinfurt (DE); Leberfinger, Florian, 97209 Veitshöchheim (DE); Rönnebeck, Ralf, 97453 Schonungen (DE); van Heyden, Marcus, 97456 Dittelbrunn (DE); Gehring, Alexander, 97437 Haßfurt (DE); Fister, Michael, Dr., 97490 Poppenhausen (DE)

(57) **Zusammenfassung**

Es wird ein Verfahren zur Imprägnierung einer Wicklung einer elektrischen Maschine zur Erzeugung einer Isollerharzschicht beschrieben, wobei zur Bildung der Isolierharzschicht auf die Wicklung in einem ersten Verfahrensschritt eine erste Isolierharzlage aufgebracht wird und wobei auf die ausgehärtete Oberfläche der ersten Isolierharzlage in einem weiteren Verfahrensschritt eine zweite Isolierharzlage aufgebracht wird.

## Beschreibung

Die Erfindung betrifft ein Verfahren zur Imprägnierung einer Wicklung einer elektrischen Maschine, die insbesondere zur Montage in einem Kraftfahrzeugantriebsstrang vorgesehen ist.

Die Wicklungen von elektrischen Maschinen werden üblicherweise aus einem isolierten elektrischen Leiter, bspw. aus einem Kupferlackdraht oder einem Backlackdraht ausgeführt, wodurch die die einzelnen Windungen der Wicklung gegeneinander vor Kurzschlüssen isoliert und vor elektrischen Überschlägen geschützt sind. Die Herstellung solcher Leiterdrähte ist durch das Aufbringen mehrerer geschlossener Schutzschichten sehr aufwändig. Beim Herstellen und Aufbringen der Wicklung auf den Stator oder den Rotor der elektrischen Maschine wird der Wicklungsdraht, insbesondere durch die im Bereich der Wickelköpfe vergleichsweise kleinen Biegeradien sehr stark beansprucht, wodurch die Isolationsschicht aufbrechen kann. Derartige, mit bloßem Auge zumeist nicht sichtbare Beschädigungen sind in trockener Umgebung oft unproblematisch. Erst beim Auftreten von Feuchtigkeit können sich an solchen Schadstellen Kriechströme ausbilden und auch Wicklungskurzschlüsse auftreten.

Zum noch besseren Schutz der wicklungstragenden Baugruppen und zur Unterstützung der Abfuhr von Wärmeverlusten der elektrischen Maschine werden diese imprägniert, indem die Oberfläche und die Hohlräume des Rotors und des Stators in einem Ganztränkverfahren mit einem Silikon-, Epoxyd-, Polyesterkunstharz oder einem anderen Imprägnierharz vollständig ummantelt bzw. ausgefüllt werden. Die dauerhafte Fixierung des Elektrotränkharzes erfolgt durch einen Aushärtprozess, bei dem durch den Einfluss von Wärme und/oder kurzwelliger UV-Strahlung eine Polymerisation des Harzes herbeigeführt wird.

Wenn die elektrische Maschine zur Anordnung in einem Fahrzeugantriebsstrang vorgesehen ist, so werden an die Wicklung und deren Imprägnierung außerordentlich hohe Forderungen gestellt. Die elektrische Maschine kann dort beispielsweise als Starter für einen Verbrennungsmotor, als Generator und/oder als alleiniger oder unterstützender Antriebsmotor arbeiten. Es muss für diesen Anwendungsfall insbesondere sichergestellt sein, dass die Wicklung der elektrische Maschine in einem Temperaturbereich von ca. -40°C bis 200°C auch unter dem Einfluss von in das Maschineninnere eindringender Feuchtigkeit und Wasser und unter dem Einfluss von aggressiven Medien wie z.B. Streusalznebeln, betriebssicher isoliert ist. Zudem muss die elektrische Maschine so ausgelegt sein, dass diese gegenüber beim Betreiben des Fahrzeugs auftretenden Vibrationen und infolge von extremen Temperaturwechselbelastungen verursachten mechanischen Spannungen stabil ist. Als ein geeignetes Flüssig-Imprägnierharz zur Imprägnierung von Traktionsmotoren ist beispielsweise das Harz "SILRES H62" der Wacker-Chemie GmbH bekannt, womit üblicherweise Isolierharzschichten mit einer Dicke von in der Regel oberhalb 100µm erzeugt werden.

Es hat sich allgemein und auch bei der Verwendung des vorgenannten Harzes gezeigt, dass harzimprägnierte Statorwicklungen im Neuzustand ausreichend gegenüber äußeren Einflüssen geschützt sind und die diesbezüglich relevanten Normen erfüllen. Im Laufe der Lebensdauer unterliegt jedoch die Isolationsschicht je nach Anwendungsfall einem Alterungsprozess, bei dem sich die isolierende Harzschicht der Wicklung infolge hoher Betriebsbelastungen zersetzt, zunehmend versprödet und Risse ausbilden kann, durch weiche insbesondere Feuchtigkeit in die Wicklung und in die Verschaltungsanordnung der elektrischen Maschine eindringen kann. Die Zersetzung und weitere damit in Zusammenhang stehende Problematiken werden z.B. in der DE 28 11 858 B2 erläutert. Auf die beschriebene Weise kann es in den Wicklungskomponenten zu Kurzschlüssen kommen, wobei die Wicklung durchbrennen und die elektrische Maschine außer Betrieb gesetzt werden kann.

Es ist von der erläuterten Problematik ausgehend Aufgabe der Erfindung, ein Verfahren zur Imprägnierung einer Wicklung einer in einem Kraftfahrzeugantriebsstrang vorgesehenen elektrischen Maschine bereitzustellen, mit dem eine Isolierschicht mit einer verbesserten Beständigkeit, insbesondere gegenüber eindringenden Wasser, erzeugt werden kann.

Die Erfindung löst die vorstehend genannte Aufgabe mit einem Verfahren zur Imprägnierung einer Wicklung einer elektrischen Maschine gemäß den Merkmalen des Patentanspruchs 1.

Die Erfinder haben erkannt, dass es insbesondere bezüglich der geforderten Wasserdichtheit vorteilhaft ist, eine Isollerharzschicht mit einer geforderten Mindestdicke nicht mittels einer einzigen, sich über die gesamte Dicke erstreckende Isolierharzschicht darzustellen, sondern stattdessen die gewünschte Schichtdicke durch Abscheidung mehrerer Isolierharzlagen zu realisieren. Die so erzeugte Isolierharzschicht weist im Gegensatz zu einer Einzelschicht keinen homogenen, sondern einen durch Grenzschichten unterbrochenen inhomogenen Aufbau auf. Bei einem solchen, aus mehreren Isolierharzlagen bestehenden Schichtaufbau wird die Tatsache ausgenutzt, dass die vergleichsweise dünnen Isolierharzlagen gegenüber einer einzigen Dickschicht weitaus bessere elastische Eigenschaften aufweist, wodurch die gesamte Isolierharzschicht gegenüber betriebsbedingten mechanischen Verspannungen wesentlich unempfindlicher ist.

Von dieser Erkenntnis ausgehend, sieht das erfindungsgemäße Verfahren zunächst vor, in einem ersten Verfahrensschritt eine erste Isolierharzlage auf die Wicklung aufzubringen. Weitergehend sieht die Erfindung vor, dass auf die ausgehärtete Oberfläche der ersten Isolierharzlage in einem weiteren Verfahrensschritt eine zweite Isolierharzlage aufgebracht wird. Durch das Aushärten der ersten Lage wird weitgehend vermieden, dass sich das beim zweiten Verfahrensschritt an dieser anlagernde Isolierharzlage zu einer einzigen homogenen Schicht anlagern kann. Andererseits wird dadurch erreicht, dass die zwischen den einzelnen Isolierharzlagen wirkenden Bindungskräfte kleiner sind, als die innerhalb einer Isolierharzlage wirkende Bindungskraft. Mit anderen Worten sind die innerhalb einer Isolierharzlage wirkenden Kohäsionskräfte größer als die zwischen den Isolierharzlagen wirkenden Adhäsionskräfte.

Auf dieses Weise können sich die einzelnen Isolierharzlagen auch begrenzt relativ zueinander verlagern, so dass die gesamte Isolierharzschicht gegenüber thermomechanisch induzierten Wechselbelastungen höher bzw. länger beanspruchbar ist.

Die Erfindung ist dabei nicht auf einen zweilagigen Schichtaufbau beschränkt, d.h. die Isolierharzschicht kann auch aus einer noch größeren Lagenanzahl bestehen und so bezüglich ihrer Eigenschaften optimiert werden.

In den Unteransprüchen sind vorteilhafte Ausgestaltungen und Weiterbildungen der Erfindung angegeben.

Die einzelnen Isolierharzlagen können prinzipiell aus unterschiedlichen Harzen bestehen, wobei jedoch eine gegenseitig haftende Materialkombination erforderlich ist. Vorteilhafterweise basieren die erste und die zweite Isolierharzlage auf einem im Wesentlichen identischen Harz. Das schließt ein Verfahren ein, bei dem die einzelnen Lagen stofflich einander vollständig entsprechen. In diesem Fall ist es möglich, alle Lagen in einem einzigen Tränkbad zu erzeugen.

Mit besonderem Vorteil sind beide Isolierharzlagen aus einem Silikonharz, insbesondere aus einem Elastomer, gebildet. Gegenüber anderen Harzen, z.B. einem Epoxydharz, bietet sich der Vorteil eines besseren elastischen Verhaltens, wodurch die Rissbildungsneigung wesentlich reduziert ist.

Zur Verbesserung der Wärmeableitung weist zumindest eine der Isolierharzlagen einen Zusatzstoff, z.B. einen bestimmten Anteil im dem Harz verteilter Partikel eines Oxides, Z.B. Aluminiumoxid, oder Carbides, z.B. Siliziumcarbid, auf.

Die Wicklung der elektrischen Maschine kann direkt in Nuten eines Rotor- oder Statorblechpakets eingelegt bzw. dort gewickelt sein. Alternativ kann die Wicklung zur Anordnung an einem Blechpaket der elektrischen Maschine vorgesehene Einzelspulen umfassen, die unabhängig von dem Blechpaket z.B. von einem Zulieferer gefertigt werden. Es ist hierbei zweckmäßig, die erste Isolierharzlage unmittelbar nach dem Bewickeln der Spule, jedoch noch vor der Anordnung an dem Blechpaket auf dieser aufzubringen und die zweite Isolierharzschicht erst aufzubringen, wenn die Spulen an dem Blechpaket angeordnet sind.

Durch die Ausbildung der zweiten Isolierharzlage wird damit auch gleichzeitig ein zwischen der Wicklung und dem Blechpaket ausgebildeter Spalt ausgefüllt und damit beim Betreiben der elektrischen Maschine der Wärmeübergang von der Spule in das Blechpaket verbessert.

Die Dicke der einzelnen Isolierharzlagen ist, sofern deren Stabilität und deren gegenseitige Haftung sichergestellt sind, prinzipiell frei einstellbar. Es hat sich jedoch als günstig erwiesen, die erste, unmittelbar auf dem gewickelten Leiter vorgesehene Isolierharzlage dünner als die zweite Isolierharzlage auszubilden. Bevorzugt weist die erste Lage eine maximale Dicke von etwa 10µm, besonders bevorzugt eine Dicke von etwa 5µm - 10µm auf. Die nachfolgende Isolierharzlage ist dagegen um ein Mehrfaches dicker und bevorzugt mit einer Mächtigkeit von 70-150µm, besonders bevorzugt mit einer Mächtigkeit von ca. 80µm-110µm ausgebildet.

Zur porenfreien Herstellung der erläuterten Isolierharzschicht, die mindestens zwei Isolierharzlagen umfasst, ist ein an sich bekanntes Tauch-Imprägnierverfahren, insbesondere auch ein Vakuum-Druck-Imprägnierverfahren in bester Weise geeignet. Als Isolierharz kann günstigerweise das bereits erwähnte Isolierharz mit der Bezeichnung "SILRES H62" oder ein anderes für diesen Zweck geeignetes elastisches Elektrotränkharz benutzt werden.

Bei der somit geschaffenen Isolierschicht dient die erste, unmittelbar auf dem Wicklungsleiter abgeschiedene Isolierzharzlage insbesondere als Wasserdichtlage, während die zweite Isolierharzlage neben der weiteren Verbesserung der Dichteigenschaften insbesondere als Wärmeleitungslage fungiert und damit zu einer deutlich verbesserten Wärmeableitung aus dem Stator beiträgt und die außerdem die den Stator bildenden bzw. an diesem angeordneten Komponenten mechanisch stabilisiert.

Das Ausbildung des vorstehend beschriebenen Isolierschichtaufbaus kann mit den bekannten physikalisch-chemischen Analysetechniken leicht nachgewiesen werden.

Das nachfolgende Ausführungsbeispiel fasst das bereits voranstehend erläuterte Verfahren zur Imprägnierung einer Wicklung einer elektrischen Maschine zur Erzeugung einer Isolierharzschicht nochmals zusammen.

In einem ersten Schritt werden aus einem Kupferlackdraht Einzelspulen gewickelt, was unter Zuhilfenahme von einem oder von zwei Wickelkörpern erfolgen kann. Die beiden Wicklungsenden pro Spule werden dabei zugentlastet an einem Wickelkörper festgelegt, so dass die weitere Verschaltung der Spulen am Stator einer elektrischen Maschine mittels stoffschlüssig mit den Spulenenden verbundenen Anschlusspins erfolgen kann. Die Längsseiten der Spulen können mit einem Nutisolationspapier ummantelt werden, was jedoch für den nachfolgenden Imprägniervorgang nicht besonderer Bedeutung ist. Die konfektionierten Spulen werden zur Erzeugung der ersten, ca. 5µm-10µm dicken Isolierharzlage vollständig in ein Tränkbad des Flüssig-Tränkharzes "SILRES H62" getaucht, nach einer bestimmten Dauer wieder entnommen, überschüssiges Harz entfernt und die verbleibenden Isolierzharzlage ausgehärtet.

Nach dem Aushärten der ersten Isolierharzlage werden die Spulen an Zähnen eines Statorblechpakets angeordnet und dort gesichert. Des Weiteren können die Spulenenden mittels einer gemeinsamen Verschaltungsanordnung miteinander elektrisch verschaltet werden. Im nächsten Schritt wird das gesamte Statorblechpaket mit den daran angeordneten Spulen in das Tränkbad getaucht und somit eine weitere, jedoch ca. 80µm-110µm dicke Isolierharzlage erzeugt. Der zweite Imprägniervorgang entspricht im Wesentlichen dem ersten Imprägniervorgang, wobei jedoch zur Erzeugung einer dickeren Lage eine längere Prozessdauer erforderlich ist.

Die während dem ersten und zweiten Imprägniervorgang erforderlichen Verfahrenstemperaturen und -zeiten entsprechen den Verarbeitungshinweisen des Imprägnierharzherstellers. Die Dicke der Harzlage kann, wie dieses ebenfalls bekannt ist, leicht mittels bekannter in-situ Verfahren, z.B. durch Kapazitätsmessungen, verfolgt werden.

## Patentansprüche

1. Verfahren zur Imprägnierung einer Wicklung einer elektrischen Maschine zur Erzeugung einer Isolierharzschicht, wobei zur Bildung der Isolierharzschicht auf die Wicklung in einem ersten Verfahrensschritt eine erste Isolierharzlage aufgebracht wird und wobei auf die ausgehärtete Oberfläche der ersten Isolierharzlage in einem weiteren Verfahrensschritt eine zweite Isolierharzlage aufgebracht wird.

2. Verfahren nach Anspruch 1,
**dadurch gekennzeichnet,**
**dass** die erste und die zweite Isolierharzlage auf einem im Wesentlichen identischen Harz basieren.

3. Verfahren nach Anspruch 1 oder 2,
**dadurch gekennzeichnet,**
**dass** beide Isolierharzlagen aus einem Silikonharz gebildet sind.

4. Verfahren nach einem der vorhergehenden Ansprüche,
**dadurch gekennzeichnet,**
**dass** zumindest eine der Isolierharzlagen einen Zusatzstoff zur Verbesserung der Wärmeleitfähigkeit aufweist.

5. Verfahren nach einem der vorhergehenden Ansprüche,
**dadurch gekennzeichnet,**
**dass** die Wicklung der elektrischen Maschine zur Anordnung an einem Blechpaket der elektrischen Maschine vorgesehene Einzelspulen umfasst, wobei die erste Isolierharzlage vor und die zweite Isolierharzlage nach der Anordnung der Wicklung an dem Blechpaket erzeugt wird.

6. Verfahren nach einem der vorhergehenden Ansprüche,
**dadurch gekennzeichnet,**
**dass** die zweite Isolierharzlage einen zwischen der Wicklung und dem Blechpaket ausgebildeten Spalt ausfüllt.

7. Verfahren nach einem der vorhergehenden Ansprüche,
**dadurch gekennzeichnet,**
**dass** die zweite Isolierharzlage um ein Mehrfaches dicker als die erste Isolierharzlage ausgebildet ist.

8. Verfahren nach einem der vorhergehenden Ansprüche,
**dadurch gekennzeichnet,**
**dass** die Isolierharzlagen durch ein Tauch-Imprägnierverfahren erzeugt werden.
